# EUROPEAN PATENT APPLICATION

(11) **EP 2 280 246 A2**
(43) Date of publication of application: **02.02.2011**
(21) Application number: 10168706.9
(22) Date of filing: 07.07.2010
(51) Int. Cl.: G01D 5/14

(54) **Angle-of-rotation sensor apparatus**

(30) Priority: 30.07.2009 JP 2009177395
(71) Applicant: TDK Corporation, Tokyo 103-8272 (JP)
(72) Inventor: Saruki, Shunji, Tokyo 103-8272 (JP); Hirabayashi, Hiraku, Tokyo 103-8272 (JP)
(74) Representative: HOFFMANN EITLE

(57) **Abstract**

The angle-of-rotation sensor apparatus of the invention comprises a shaft (10) supported rotatably about an axial center, a permanent magnet (20) fixed to one end face of the shaft, and a magnetic field sensor device (30) located in opposition to the permanent magnet at a constant spacing. The permanent magnet used is in a cuboidal shape and magnetized in the minor axis (X) direction at the rectangular surface opposing to the magnetic field sensor device. The minor axis side is defined as the X direction and the major axis side as the Y direction. Given the opposing surface of the same area, the area where the angle distribution of the magnetic field emitted out of the permanent magnet can be placed in a uniform direction is made so wide that the tolerance range for axial alignment errors between the magnetic field sensor device and the permanent magnet can be enlarged.

## Description

### BACKGROUND OF THE INVENTION

### FIELD OF THE INVENTION

The present invention relates specifically to an angle-of-rotation sensor apparatus adapted to sense the angle of rotation of rotary objects such as car steering.

### EXPLANATION OF THE PRIOR ART

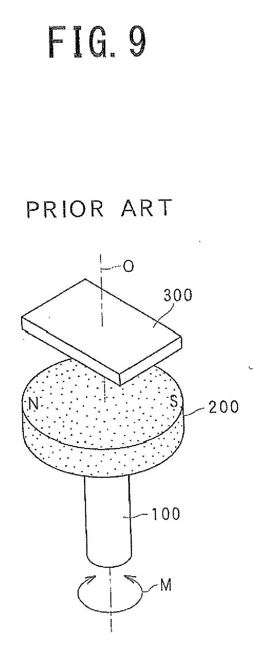

One example of conventional angle-of-rotation sensor assemblies making use of a magneto-resistive effect device is shown in Fig. 9.

Referring to Fig. 9, a shaft is rotatably supported by bearings (not shown) about an axial center O in a direction shown by an action arrow M. The shaft 100 is fixedly provided with a permanent magnet 200 of disk shape at its one end. As shown, the permanent magnet 200 is magnetized in an in-plane direction such that its one circumferential end defines an N-pole and the other defines an S-pole. This makes sure the magnetic field direction of the permanent magnet 200 is rotated in association with rotation of the shaft 100.

A magnetic field sensor 300 including magneto-resistive effect devices at a given spacing is located in opposition to the permanent magnet 200. The magnetic field sensor 300 is located on the axial center O, and fixed by a casing (not shown).

The magnetic field sensor 300 is constructed into a so-called Wheatstone bridge using, for instance, four magneto-resistive effect devices. Each or the magneto-resistive effect device has a multilayer structure comprising a pinned layer and a free layer, wherein by setting the direction of the pinned layer in the device in a predetermined direction, an output voltage across the middle of the bridge is produced in a sine waveform or a cosine waveform depending on the angle of rotation in the magnetic field direction of the permanent magnet 200 in association with rotation of the shaft 100. The waveform of this output voltage is used as a portion of sensing the angle of rotation.

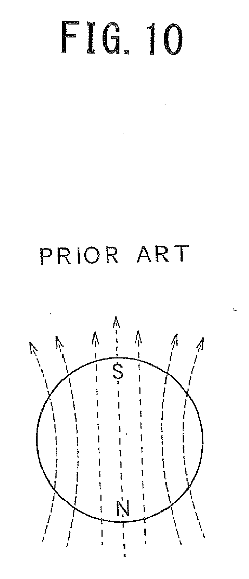

However, the permanent magnet 200 is magnetized such that its circumferential one end defines the N-pole and the other provides the S-pole. As shown in Fig. 10, practical magnetic field directions are such that a straight N-S magnetic field (lines of magnetic force) is obtained at the middle of the magnet along the N-S, but as there are right and left deflections from the middle of the magnet along the N-S, it causes the magnetic field (lines of magnetic force) to tend to deflect gradually away.

Therefore, in the case where the center position of the magnetic field sensor 300 is in ideal alignment with the center position of the permanent magnet 200 with no axial misalignment at all, the angle position vs. output voltage relation in the output voltage waveform (for instance, a sine wave) remains normal so that accurate angle positions could be sensed by detecting the output voltage.

However, when there is even the least misalignment between the center position of the magnetic field sensor 300 and the center position of the permanent magnet 200, that is, when there is no choice but to use lines of magnetic force which deflect right and left away from the middle of the magnet along the N-S, the angle position vs. output relation in the output voltage waveform (for instance, the sine wave) deviates from the normal state, giving rise to inconvenience: accurate angle positions cannot be sensed. To increase precision with which the angle is sensed, the angle distribution of a magnetic field emitted out of the magnet 200 must be placed in a direction as uniform as possible.

With a magnet of larger size, it is possible to widen an area in which the angle distribution of a magnetic field emitted out of the magnet could be in a uniform direction. However, it would give rise to another inconvenience: magnet costs grow too high. Some of magnets having improved magnetic characteristics have limitations in terms of size with which they can be prepared by sintering.

Given the magnetic field sensor device 300 and the permanent magnet 200 opposite to it have the same surface area, therefore, an area wide enough to allow the angle distribution of a magnetic field emitted out of the permanent magnet 200 to lie in a uniform direction is particularly desired from the points of view that the tolerance range for axial alignment errors for both is made wide, and magnet size is reduced.

The situations being like this, the present invention has for its object to provide an angle-of-rotation sensor apparatus wherein an area that allows the angle distribution of a magnetic field emitted out of a magnet to lie in a uniform direction is made wide enough to enlarge a tolerance range for axis alignment errors between the magnetic field sensor device and the permanent magnet, and magnet size reductions are achievable as well.

### DISCLOSURE OF THE INVENTION

According to the invention, such an object is accomplished by the provision of an angle-of-rotation sensor apparatus having a center axis, which comprises a shaft that is rotatably supported about the center axis, a permanent magnet fixed to one end face of said shaft, and a magnetic field sensor device located in opposition to said permanent magnet at a constant spacing, wherein said permanent magnet is in a cuboidal form and magnetized in a minor axis (X) direction at a rectangular surface thereof opposing to said magnetic field sensor device with the proviso that a minor axis side is defined as an X direction and a major axis side is defined as a Y direction.

In a preferable embodiment of the inventive angle-of-rotation sensor apparatus, said permanent magnet is fixedly provided with a center-of-gravity position thereof lying in alignment of an extension of the center axis of said shaft.

In another preferred embodiment of the inventive angle-of-rotation sensor apparatus, said magnetic field sensor device is adapted to sense an angle of rotation of said shaft, and comprises a first Wheatstone bridge defined by four resistance elements interconnected and a second Wheatstone bridge defined by four resistance elements interconnected, wherein said four resistance elements are each constructed of one or two or more magneto-resistive effect (MR) devices, and wherein through said first Wheatstone bridge, an output voltage vs. angle-of-rotation relation is obtained in a sine waveform and through said second Wheatstone bridge, an output voltage vs. angle-of-rotation relation is obtained in a cosine waveform that has a phase shifting of 90° from said sine waveform.

In yet another preferred embodiment of the inventive angle-of-rotation sensor apparatus, said magnetic field sensor device is adapted to sense an angle of rotation of said shaft, and comprises a first Wheatstone bridge defined by four resistance elements interconnected and a second Wheatstone bridge defined by four resistance elements interconnected, wherein said four resistance elements are each constructed of one or two or more tunnel magneto-resistive effect (TMR) devices, and wherein through said first Wheatstone bridge, an output voltage vs. angle-of-rotation relation is obtained in a sine waveform and through said second Wheatstone bridge, an output voltage vs. angle-of-rotation relation is obtained in a cosine waveform that has a phase shifting of 90° from said sine waveform.

In a further preferred embodiment of the inventive angle-of-rotation sensor apparatus, said tunnel magneto-resistive effect (TMR) devices are each in a dominant device form having a barrier layer sandwiched between a free layer and a pinned layer, wherein at the first Wheatstone bridge, interconnected and adjacent tunnel magneto-resistive effect (TMR) devices have directions of magnetization of the pinned layers which are 180° mutually different, and at the second Wheatstone bridge, interconnected and adjacent tunnel magneto-resistive effect (TMR) devices have directions of magnetization of the pinned layers which are 180° mutually different.

In a further preferred embodiment of the inventive angle-of-rotation sensor apparatus, said permanent magnet opposing to said magnetic field sensor device has an Ly/Lx ratio of 2 to 21 where Lx and Ly are lengths (mm) in a minor axis (X) direction and a major axis (Y) direction of a rectangular shape of said permanent magnet, respectively.

In a further preferred embodiment of the inventive angle-of-rotation sensor apparatus, said permanent magnet opposing to said magnetic field sensor device has an area Lx·Ly of 4 to 900 where Lx and Ly are lengths (mm) in a minor axis (X) direction and a major axis (Y) direction of a rectangular shape of said permanent magnet, respectively.

In a further preferred embodiment of the inventive angle-of-rotation sensor apparatus, said permanent magnet is a neodymium·iron· boron-based magnet, a samarium· cobalt-based magnet or a ferrite-based magnet.

The invention provides an angle-of-rotation sensor apparatus having a center axis, which comprises a shaft that is rotatably supported about the center axis, a permanent magnet fixed to one end face of said shaft, and a magnetic field sensor device located in opposition to said permanent magnet at a constant spacing, wherein said permanent magnet is in a cuboidal form and magnetized in a minor axis (X) direction at a rectangular surface thereof opposing to said magnetic field sensor device with the proviso that a minor axis side is defined as an X direction and a major axis direction is defined as a Y direction. Thus, given the opposite surface having the same area, it is possible to widen the area in which the angle distribution of a magnetic field emitted out of the permanent magnet can be in a uniform direction. This in turn makes it possible to enlarge the tolerance range for axial misalignments between the magnetic field sensor device and the permanent magnet. Given the same tolerance range for axial misalignments, magnets of smaller size could be used, leading to cost reductions. At the constant spacing where the permanent magnet is in close proximity to the magnetic field sensor device, extremely high in-plane magnetic field strength is achievable, and works in favor of magnet size reductions.

### BRIEF EXPLANATION OF THE DRAWINGS

Fig. 1 is a schematically perspective view illustrative of the structure of part of the angle-of-rotation sensor apparatus comprising a permanent magnet fixed to one end face of a shaft supported rotatably about a center axis, and a magnetic field sensor device located in opposition to the permanent magnet at a constant spacing.
Fig. 2 is illustrative of one example of the arrangement of the magnetic field sensor device, showing one exemplary first Wheatstone bridge having four resistance elements (each of which is made up of one or two or more magneto-resistive effect (MR) devices) interconnected.
Fig. 3 is illustrative of one example of the arrangement of the magnetic field sensor device, showing one exemplary second Wheatstone bridge having four resistance elements (each of which is made up of one or two or more magneto-resistive effect (MR) devices) interconnected.
Fig. 4 is a sectional view schematically illustrative of the form of part of a tunnel magneto-resistive effect (TMR) device.
Fig. 5 is illustrative of an angle-of-rotation vs. output voltage relation obtained through a Wheatstone bridge having four resistance elements (each of which is made up of one or two or more magneto-resistive effect (MR) devices) interconnected).
Fig. 6 is a graph illustrative of relationship between a magnet-to-sensor distance and a sensor's in-plane magnetic field strength, with the parameter being magnets having the same surface area but varying in shape.
Fig. 7 is a graph illustrative of relationship between a magnet-to-sensor distance and a sensor's in-plane magnetic field strength, with the parameter being a magnet having the inventive requirements.
Figs. 8A, 8B, 8C and 8D are each illustrative of the distribution of direction of a magnetic field emitted out of each of the magnets referred to as the parameters in Fig. 6 at a position of a 10 mm×10 mm plane at a 3 mm spacing from the X-Y plane: an area in which a middle cross-shaped area portion provides an ideal magnetic field direction with respect to the X axis, with an error range of 0 to 1.2 degrees and the magnet shape (X-Y plane) being indicated by a dotted line.
Fig. 9 is a schematically perspective view illustrative of one example of the prior art angle-of-rotation sensor apparatus.
Fig. 10 is a view for illustrating problems with the prior art, in which the distribution of a magnetic field direction of a magnet is schematically shown.

### DETAILED EXPLANAITON OF THE INVENTION

Some embodiments of the inventive angle-of-rotation sensor apparatus are now explained at great lengths.

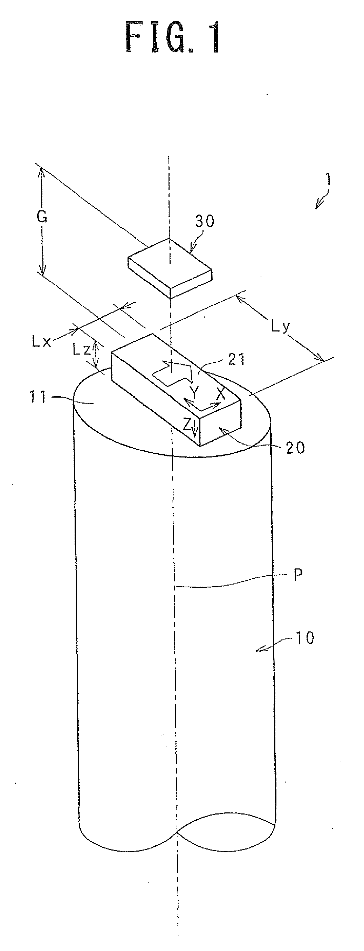

Fig. 1 is a schematically perspective view in which the arrangement of part of the inventive angle-of-rotation sensor apparatus 1 is schematically illustrated.

As shown in Fig. 1, the inventive angle-of-rotation sensor apparatus 1 is built up of a shaft 10 supported rotatably about a center axis P (depicted by a one-dot chain line), a permanent magnet 20 fixed to one end face 11 of the shaft 10, and a magnetic field sensor device 30 located in opposition to the permanent magnet 20 at a constant spacing.

In the disclosure here, a gap G between the permanent magnet 20 and the magnetic field sensor device 30 (often called simply the sensor hereinafter) may optionally be set depending on the magnetic characteristics of the permanent magnet 20 used, the sensibility of the magnetic field sensor device 30, etc. For instance, the gap G should preferably be set such that the in-plane magnetic field strength of the magnetic field sensor device 30 is the desired 200 Oe or greater, preferably 300 Oe or greater. In general, the gap G is set in the range of 1 to 4 mm for ferrite-based magnets, and 1 to 9 mm for neodymium·iron·boron-based magnets.

### [Explanation of the Permanent Magnet 20]

As shown in Fig. 1, the permanent magnet 20 here is in a cuboidal shape.

For the sake of illustration, the surface 21 of the cuboidal permanent magnet 20 opposing to the magnetic field sensor device 30 is taken as the X (axis)-Y (axis) plane, with its minor axis side as the X direction and its major axis side as the Y direction, as shown. A thickness direction is taken as the Z axis direction. Given the XYZ defined as mentioned just above, the permanent magnet 20 here is magnetized in the minor axis (X) direction.

The permanent magnet 20 should preferably be fixed in place such that its center-of-gravity position is in alignment with an extension of the center axis P of the shaft 10.

More specifically, let Lx be the length (mm) of the opposite surface 21 of the permanent magnet 20 in the minor axis (X) direction and Ly be the length (mm) of the opposite surface 21 in the major axis (Y) direction. Then the area Lx·Ly indicative of the area of that opposite surface 21 should be in the range of 4 to 90 mm², and the ratio Ly/Lx should be in the range of 2 to 21. The thickness Lz of the permanent magnet in the thickness (Z axis) direction may be set enough to make sure the magnetic field strength necessary for the sensor.

As the value of the area Lx·Ly is less than 4 mm², there is an undesired tendency that the tolerance range for axial misalignments between the magnetic field sensor device and the permanent magnet becomes narrow, and the magnetic field strength dwindles as well. As the value of the area Lx·Ly grows greater than 900 mm², it is contrary to the object of attaining both size reductions and cost reductions. There are also some limitations on magnet production.

As the value of Ly/Lx is all too less than 2, there is an undesired tendency that the advantages of the invention are difficult to achieve.

Conversely, as the value of Ly/Lx exceeds 21, there is an undesired tendency that the orbit-of-rotation area of the magnet grows large.

To be specific, the range of Lx is on the order of 2 to 15 mm; the range of Ly is on the order of 4 to 30 mm; and the range of Lz is on the order of 2 to 10 mm.

Such permanent magnet 20 should preferably be made of a neodymium·iron·boron-based magnet, a samarium· cobalt-based magnet, and a ferrite-based magnet.

The permanent magnet 20 should have such magnetic characteristics as expressed in terms of a residual flux density Br = about 2 to 15 kG, a coercive force = 2.5 to 40 kOe, and a maximum energy product (BH)max = about 1 to 50 MGOe.

There is no particular limitation on how to magnetize the permanent magnet 20 here in the minor axis (X) direction; for instance, there may be a method used wherein an anisotropic magnet is processed in the desired configuration with the minor axis direction as an easy axis of magnetization, and then magnetized by means of magnetostatic field magnetization or pulsed field magnetization.

### [Explanation of the Magnetic Field Sensor Device 30]

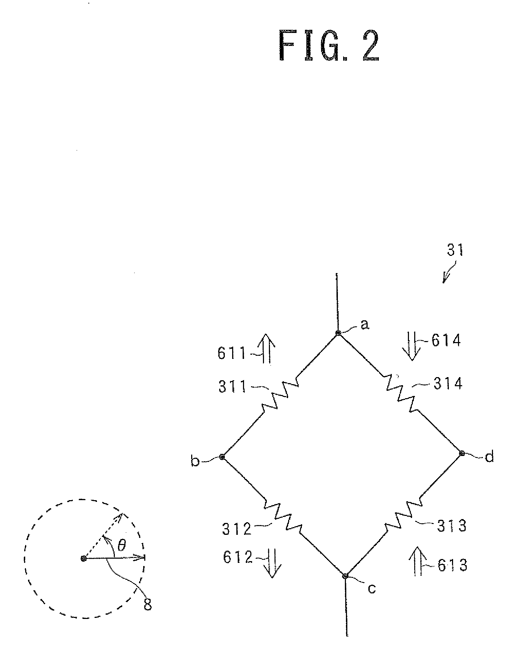

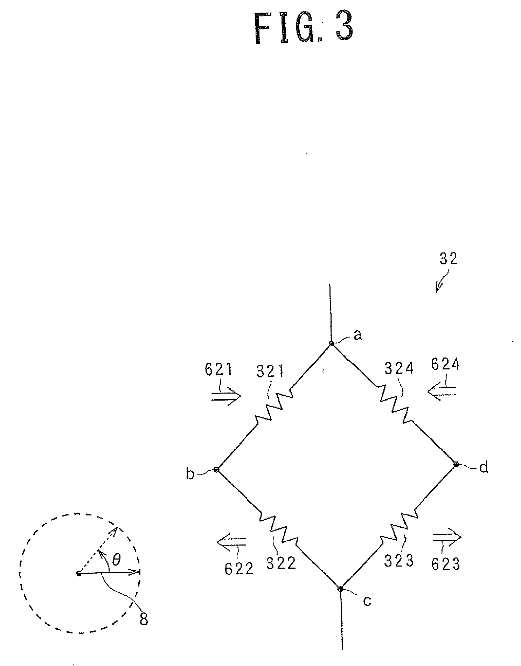

The magnetic field sensor device 30 is adapted to sense the angle of rotation of the aforesaid shaft 10. The magnetic field sensor device 30 preferably used here is built up of a first Wheatstone bride 32 as shown typically in Fig. 2, and a second Wheatstone bridge 32 as shown typically in Fig. 3.

### First Wheatstone Bridge 31

The first Wheatstone bridge 31 has four resistance elements 311, 312, 313 and 314 interconnected, as shown in Fig. 2. These resistance elements 311, 312, 313 and 314 are each constructed of one or two or more tunnel magneto-resistive effect (TMR) devices. Coupling terminals a and c of the four resistance elements are connected to a power source so that output voltages at coupling terminals b and d can be measured.

The tunnel magneto-resistive effect (TMR) device(s) built in each resistance element 311, 312, 313, 314 has a dominant device configuration wherein a barrier layer 5 is sandwiched between a free layer 4 and a pinned layer 6. The free layer 4 is a magnetic layer functioning such that the direction of magnetization changes depending on an external magnetic field. The pinned layer 6 is a magnetic layer having a fixed direction of magnetization: the magnetization is fixed by the provision of, for instance, an antiferromagnetic layer having pinning action. The barrier layer 5 is a film through which electrons pass while spins are reserved by the tunnel magneto-resistive effect, and for it use may be made of oxides, nitrides and the like of Al, Ni, Gd, Mg, Ta, Mo, Ti, W, Hf, and Zr.

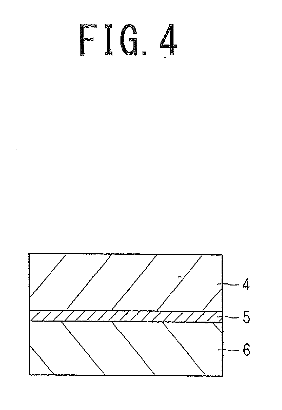

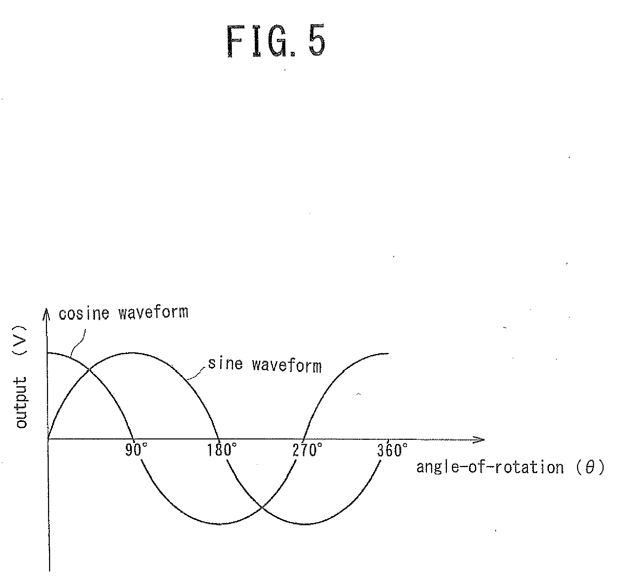

In the first Wheatstone bridge 31 shown in Fig. 2, the pinned layers 6 (Fig. 4) of the tunnel magneto-resistive effect (TRM) devices built in the respective four resistance elements have fixed directions of magnetization indicated by double-action arrows 611, 612, 613 and 614. In this first Wheatstone bridge 31, the directions of magnetization of the pinned layers 6 in the interconnected and adjacent tunnel magneto-resistive effect (TMR) devices are in the relation where the difference of the angle of 180° is caused as viewed vertically to the drawing sheet. Thus, the fixed directions of magnetization 611 and 613 as well as 612 and 614 of the pinned layers 6 in the tunnel magneto-resistive effect (TMR) devices located at the opposing position remain same. In this case, the magnetic field 8 to be sensed (the magnetic field of the permanent magnet 20) is first positioned in the horizontal direction of the sheet of Fig. 2, and as it rotates from this state along a dotted line, relations between the angle of rotation θ and output voltages at the coupling terminals b and d are drawn in the sine waveform of Fig. 5.

### Second Wheatstone Bridge 32

The second Wheatstone bridge 32 has four resistance elements 321, 322, 323 and 324 interconnected, as shown in Fig. 3. These resistance elements 321, 322, 323 and 324 are each constructed of one or two or more tunnel magneto-resistive effect (TMR) devices. Coupling terminals a and c of the four resistance elements are connected to a power source so that output voltages at coupling terminals b and d can be measured.

As is the case with the aforesaid tunnel magneto-resistive effect devices, the tunnel magneto-resistive effect (TMR) devices incorporated in the respective resistance elements 321, 322, 323 and 324 have a dominant device form wherein such a barrier layer 5 as shown in Fig. 4 is sandwiched between a free layer 4 and a pinned layer 6. These layers have already been explained.

In the second Wheatstone bridge 32 shown in Fig. 3, the pinned layers 6 of the tunnel magneto-resistive effect (TRM) devices built in the respective four resistance elements have fixed directions of magnetization indicated by double-action arrows 621, 622, 623 and 624. In this second Wheatstone bridge 32, the directions of magnetization of the pinned layers 6 in the interconnected and adjacent tunnel magneto-resistive effect (TMR) devices are in the relation where the difference of the angle of 180° is caused as viewed horizontally to the drawing sheet. Thus, the fixed directions of magnetization 621 and 623 as well as 622 and 624 of the pinned layers 6 in the tunnel magneto-resistive effect (TMR) devices located at the opposing position remain same. In this case, the magnetic field 8 to be sensed (the magnetic field of the permanent magnet 20) is first positioned in the horizontal direction of the sheet of Fig. 3, and as it rotates from this state along a dotted line, relations between the angle of rotation θ and output voltages at the coupling terminals b and d are drawn in the cosine waveform of Fig. 5.

The combined use of the sine and cosine waveforms in Fig. 5 makes it possible to accurately sense the angle of rotation even at the same voltage, and accurately recognize the angle of rotation.

It is noted that although the aforesaid tunnel magneto-resistive effect (TMR) device has been referred to as a particularly preferred one, use may be made of not only AMR or GMR (CIP, CPP) but also a hole sensor using a hole device if they belong to the so-called magneto-resistive effect (MR) device category.

With reference to the aforesaid arrangement, how the inventive angle-of-rotation sensor apparatus works is now briefly explained.

As the shaft 10 rotates upon rotational movement, there is a change in the magnetic field of the permanent magnet 20 fixed onto one end face of the shaft. This changing magnetic field is sensed by the magnetic field sensor device 30 so that output signals of such sine and cosine waveforms as depicted in Fig. 5 are entered into a control means, where the entered signals of sine and cosine waveforms are calculated to sense the angle of rotation of the rotating shaft. According to the invention wherein the permanent magnet used is in a cuboidal shape and magnetized in the minor axis direction at the rectangular surface opposing to the magnetic field sensor device, it is possible to widen the area where the angle distribution of the magnetic field emitted out of the permanent magnet can be placed in a uniform direction. It is thus possible to enlarge the tolerance range for axial alignment errors between the magnetic field sensor device and the permanent magnet.

In another point-of-view, given the same tolerance range for axial alignment errors, magnets of smaller size can be used, leading to cost reductions. At the constant gap through which the permanent magnet is in close proximity to the magnetic field sensor device, extremely high in-plane magnetic field strength is achievable, also working in favor of magnet size reductions.

### Examples

The present invention is now explained in more details with reference to specific experiments with the inventive angle-of-rotation sensor apparatus.

### [Experiment I]

Various forms of magnets having the following X, Y and Z dimensions were provided imaginarily for simulation as the permanent magnet 20 to emit out the magnetic field to be sensed. The X-Y plane defines the surface opposing to the magnetic field sensor device, and Z defines the thickness direction.

The opposing plane or X-Y plane of the permanent magnet 20 had an area of constant 100 m² for all the samples.

The samples used were all made of the same strontium-based anisotropic ferrite magnet material.

The permanent magnet 20 was magnetized in the X direction. That is, magnet samples in Inventive Examples 1 and 2 were magnetized in the minor axis direction.

### (Construction of the Permanent Magnet 20)

### Comparative Example 1:

Square Opposing Surface (X=10 mm; Y=10 mm; Z=3 mm)
Lx=10, Ly=10: Ly/Lx=1

### Inventive Example 1:

Rectangular Opposing Surface (X=8 mm; Y=12.5 mm; Z= 3mm)
Lx=8, Ly=12.5: Ly/Lx=1.56

### Inventive Example 2:

Rectangular Opposing Surface (X=5 mm; Y=20 mm; Z=3 mm)
Lx=5, Ly=20: Ly/Lx=4

### Comparative Example 2:

Circular Opposing Surface (Radius R=5.64 mm; Z=3 mm)

Four such magnets were used to figure out relations between the magnet 20-to-sensor 30 (equivalent to the magnetic field sensor device 30) distance (mm) and the sensor's in-plane magnetic field strength (Oe) through simulation by the finite element method.

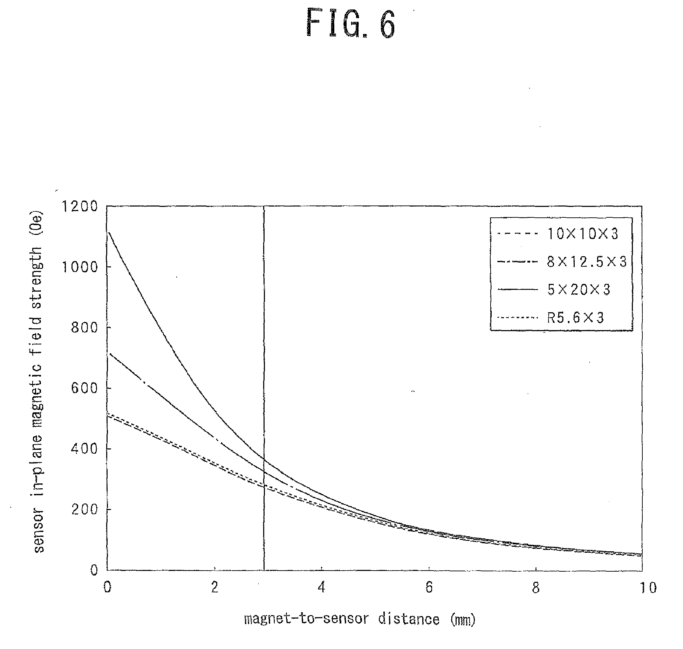

The results of calculations are graphically shown in Fig. 6.

From the Fig. 6 graph, it has been found that when the aspect ratio is varied with the X-Y area kept constant, the longer the length (the magnet is magnetized in the transverse (X) direction), the shorter (less than 4 mm in general, and less than 3 mm in particular) the magnet-to-sensor distance becomes and the stronger the sensor's in-plane magnetic field strength (Oe) grows. It has also been found that the circular magnet of Comparative Example 2 is practically the same as the square magnet of Comparative Example 1 in terms of magnetic field strength.

From these facts, it has been found that the inventive angle-of-rotation sensor apparatus, if the magnet desired in the invention is used therewith, could work more in favor of a shorter magnet-to-sensor distance, and so brought up to an ideal design.

### [Experiment II]

The sample of Inventive Example 2 (the rectangular opposing surface (X=5 mm; Y=20 mm; Z=3 mm) used in Experiment I was shortened in the Y direction for further size reductions, thereby imaginarily preparing samples according to the following Inventive Examples 3 and 4.

### Inventive Example 3:

Rectangular Opposing Surface (X=5 mm; Y=15 mm; Z=3 mm)
Lx=5, Ly=15_{:} Ly/Lx=3

### Inventive Example 4:

Rectangular Opposing Surface (X=5 mm; Y=12 mm; Z= 3 mm)
Lx=5, Ly=12: Ly/Lx=2.4

Each magnet was magnetized in the minor axis (X) direction.

As in Experiment I, relations between the magnet 20-to-sensor 30 (equivalent to the magnetic field sensor device 30) distance (mm) and the sensor's in-plane magnetic field strength (Oe) were found.

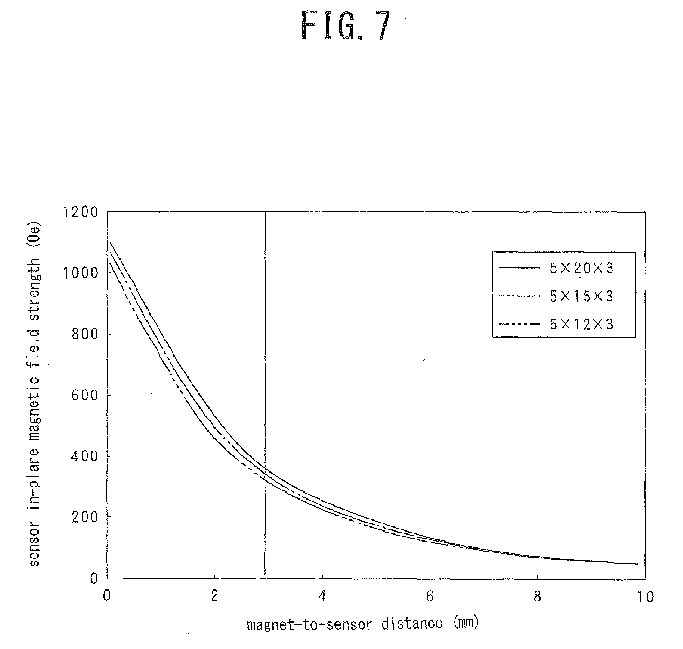

The results of these experiments are graphically shown in Fig. 7.

From the Fig. 7 graph, it has been ascertained that there is practically no or little change in magnetic field strength even when, with the minor axis or X direction length kept at a constant 5 mm, the major axis or Y direction length is shortened to let Ly/Lx be 3 and Ly/Lx be 4.

### [Experiment III]

The four magnets used in Experiment I were again used to figure out, through simulation by the finite element method, the distribution of the direction of magnetization in a 10 mm×10 mm area at a 3 mm spacing up from the X-Y plane (surface) of the magnet 20.

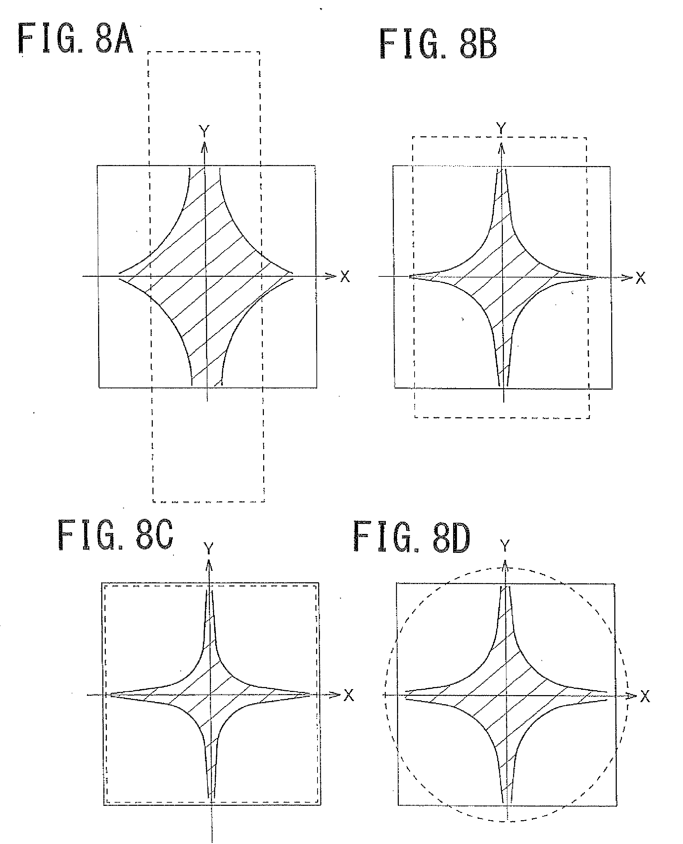

Referring to Fig. 8A, the magnet of Inventive Example 2 (having a rectangular opposing surface (X=5 mm; Y=20 mm; Z=3 mm)) was used. Suppose here that the X-Y surface of the magnet lies at 3 mm below the drawing sheet (the X-Y surface of the magnet of 5 mm×20 mm in size is shown by a dotted line in Fig. 8A), and that the position of the drawing sheet defines the 10 mm×10 mm area for measuring the distribution of the direction of magnetization.

In the 10 mm×10 mm area (a solid line) in Fig. 8A, there is a cross-shaped, hatched area extending along the X and Y axes, which is indicative of an ideal direction of magnetization with respect to the X axis (magnetized direction), and in which there is an error of barely 0 to 1.2 degrees from that ideal direction of magnetization. The wider this error range in general and the middle thereof in particular, the wider the tolerance range for axial misalignment of the magnetic field sensor device 30 could grow. While a group of areas may be shown at an about 1 degree segment from the error of 1.2 degree to 21.8 degrees, it is understood that only the area necessary for an understanding of the invention is given.

Referring to Fig. 8B, the magnet of Inventive Example 1 (having a rectangular opposing surface (X=8 mm; Y=12.5 mm; Z=3 mm)) was used. Suppose here that the X-Y surface of the magnet lies at 3 mm below the drawing sheet (the X-Y surface of the magnet of 8 nun×12.5 mm in size is shown by a dotted line in Fig. 8B), and that the position of the drawing sheet defines the 10 mm×10 mm area for measuring the distribution of the direction of magnetization.

In the 10 mm×10 mm area (a solid line) in Fig. 8B, there is a cross-shaped, hatched area extending along the X and Y axes, which is indicative of an ideal direction of magnetization with respect to the X axis (magnetizing direction), and in which there is an error of barely 0 to 1.2 degrees.

Referring to Fig. 8C, the magnet of Comparative Example 1 (having a rectangular opposing surface (X=10 mm; Y=10 mm; Z=3 mm)) was used. Suppose here that the X-Y surface of the magnet lies at 3 mm below the drawing sheet (the X-Y surface of the magnet of 10 mm×10 mm in size is shown by a dotted line in Fig. 8C), and that the position of the drawing sheet defines the 10 mm×10 mm area for measuring the distribution of the direction of magnetization.

In the 10 mm×10 mm area (a solid line) in Fig. 8C, there is a cross-shaped, hatched area extending along the X and Y axes, which is indicative of an ideal direction of magnetization with respect to the X axis (magnetized direction), and in which there is an error of barely 0 to 1.2 degrees.

Referring to Fig. 8D, the magnet of Comparative Example 2 (having a circular opposing surface (Radius R=5.64 mm; Z=3 mm)) was used. Suppose here that the X-Y surface of the magnet lies at 3 mm below the drawing sheet (the X-Y surface of the magnet of 5.64 mm in radius R is shown by a dotted line in Fig. 8D), and that the position of the drawing sheet defines the 10 mm×10 mm area for measuring the distribution of the direction of magnetization.

In the 10 mm×10 mm area (a solid line) in Fig. 8D, there is a cross-shaped, hatched area extending along the X and Y axes, which is indicative of an ideal direction of magnetization with respect to the X axis (magnetized direction), and in which there is an error of barely 0 to 1.2 degrees.

From these results, it is found that when the aspect ratio is varied with the X-Y area kept constant (or in the case of a square or rectangular magnet), the longer the major axis direction length, the wider the tolerance margin for angle misalignments could grow.

It is also found that the circular magnet too has a wide tolerance margin for angle misalignments, but magnets having a longer major axis length work more effectively. With circular magnets, there is inconvenience that production costs rise unavoidably from production considerations.

Although not shown in Fig. 8, it has been ascertained that Inventive Examples 3 (X=5 mm; Y=15 mm; Z=3 mm) and 4 (X=5 mm; Y=12 mm; Z=3 mm) smaller in area than Comparative Example 1 (having a square opposing surface (X=10 mm; Y=10 mm; Z=3 mm) work more for making sure a wider tolerance margin for angle misalignments.

The advantages of the invention would be evident from the aforesaid results of experimentation.

Thus, according to the invention wherein the permanent magnet used is in a cuboidal shape and magnetized in the minor axis direction at the rectangular surface opposing to the magnetic field sensor device, it is possible to widen the area where the angle distribution of the magnetic field emitted out of the permanent magnet can be placed in a uniform direction. It is thus possible to enlarge the tolerance range for axial alignment errors between the magnetic field sensor device and the permanent magnet. Further, given the same tolerance range for axial alignment errors, magnets of smaller size can be used, leading to cost reductions. At the constant gap through which the permanent magnet is in close proximity to the magnetic field sensor device, extremely high in-plane magnetic field strength is achievable, also working in favor of magnet size reductions.

The angle-of-rotation sensor apparatus of the invention could find use in various technical fields inclusive of, for instance, the automobile and electronic parts industries.

## Claims

1. An angle-of-rotation sensor apparatus having a center axis, which comprises a shaft that is rotatably supported about the center axis, a permanent magnet fixed to one end face of said shaft, and a magnetic field sensor device located in opposition to said permanent magnet at a constant spacing, wherein said permanent magnet is in a cuboidal form and magnetized in a minor axis (X) direction at a rectangular surface thereof opposing to said magnetic field sensor device with the proviso that a minor axis side is defined as an X direction and a major axis side is defined as a Y direction.

2. The angle-of-rotation sensor apparatus according to claim 1, wherein said permanent magnet is fixedly provided with a center-of-gravity position thereof lying in alignment of an extension of the center axis of said shaft.

3. The angle-of-rotation sensor apparatus according to claim 1 or claim 2, wherein said magnetic field sensor device is adapted to sense an angle of rotation of said shaft, and comprises a first Wheatstone bridge defined by four resistance elements interconnected and a second Wheatstone bridge defined by four resistance elements interconnected, wherein said four resistance elements are each constructed of one or two or more magneto-resistive effect (MR) devices, and wherein through said first Wheatstone bridge, an output voltage vs. angle-of-rotation relation is obtained in a sine waveform and through said second Wheatstone bridge, an output voltage vs. angle-of-rotation relation is obtained in a cosine waveform that has a phase shifting of 90° from said sine waveform.

4. The angle-of-rotation sensor apparatus according to claim 1 or claim 2, wherein said magnetic field sensor device is adapted to sense an angle of rotation of said shaft, and comprises a first Wheatstone bridge defined by four resistance elements interconnected and a second Wheatstone bridge defined by four resistance elements interconnected, wherein said four resistance elements are each constructed of one or two or more tunnel magneto-resistive effect (TMR) devices, and wherein through said first Wheatstone bridge, an output voltage vs. angle-of-rotation relation is obtained in a sine waveform and through said second Wheatstone bridge, an output voltage vs. angle-of-rotation relation is obtained in a cosine waveform that has a phase shifting of 90° from said sine waveform.

5. The angle-of-rotation sensor apparatus according to claim 4, wherein said tunnel magneto-resistive effect (TMR) devices are each in a dominant device form having a barrier layer sandwiched between a free layer and a pinned layer, wherein at the first Wheatstone bridge, interconnected and adjacent tunnel magneto-resistive effect (TMR) devices have directions of magnetization of the pinned layers which are 180° mutually different, and at the second Wheatstone bridge, interconnected and adjacent tunnel magneto-resistive effect (TMR) devices have directions of magnetization of the pinned layers which are 180° mutually different.

6. The angle-of-rotation sensor apparatus according to any one of claims 1-5, wherein said permanent magnet opposing to said magnetic field sensor device has an Ly/Lx ratio of 2 to 21 where Lx and Ly are lengths (mm) in a minor axis (X) direction and a major axis (Y) direction of a rectangular shape of said permanent magnet, respectively.

7. The angle-of-rotation sensor apparatus according to any one of claims 1-6, wherein said permanent magnet opposing to said magnetic field sensor device has an area Lx·Ly of 4 to 900 where Lx and Ly are lengths (mm) in a minor axis (X) direction and a major axis (Y) direction of a rectangular shape of said permanent magnet, respectively.

8. The angle-of-rotation sensor apparatus according to any one of claims 1-7, wherein said permanent magnet is a neodymium·iron·boron-based magnet, a samarium·cobalt-based magnet or a ferrite-based magnet.
